# EUROPEAN PATENT SPECIFICATION

(11) **EP 2 564 056 B1**
(45) Date of publication and mention of the grant of the patent: **19.03.2014**
(21) Application number: 11717979.6
(22) Date of filing: 05.04.2011
(51) Int. Cl.: F03B 17/06, F03D 3/06

(54) **A TURBINE**
TURBINE
TURBINE

(30) Priority: 26.04.2010 TR 201003284
(43) Date of publication of application: 06.03.2013
(73) Proprietor: Çapan, Rahmi Oguz, 48700 Mugla (TR)
(72) Inventor: Çapan, Rahmi Oguz, 48700 Mugla (TR)
(74) Representative: Cayli, Hülya
(86) International application number: PCT/EP2011/055291
(87) International publication number: WO 2011/134758

(56) References cited:
- EP-A1- 1 079 104
- WO-A1-03/029646
- WO-A1-2005/005824
- WO-A1-2009/084992
- DE-U1- 20 313 493
- DE-U1-202006 015 410
- GB-A- 2 205 615
- US-A- 1 516 668
- US-A1- 2007 077 145
- US-B1- 6 365 984

## Description

### Technical Field

Present invention relates to turbines operated by water or wind energy.

### Prior Art

As known, fluid energies are the sources used frequently in order to produce electricity. Wind and water are the most commonly used sources. This means that energy is produced by using different turbines for both sources. For example, there are provided vanes operating on the tall towers and generator units on said towers in order to utilize wind. When these vanes are rotated by the wind, this rotation movement is converted into electricity energy. Moreover, both motion of the turbine blades rotated by sea/river water or by flow of water formed in artificial channel and motion energy of water are converted into electricity energy by generator units connected to said blades. The published patent application no. EP2154363 can set an example for wind turbines used in prior art frequently. These wind turbines are placed on the tall towers as mentioned above. Therefore, installation, maintenance, repair cost of these turbines is high. An important drawback observed in these turbines is the limited width of blades located in flow direction of wind. In other words, an increase in width of blades causes an efficiency drop and moving parts become heavier. The published patent application no. KR200435368 can set an example for water turbines. Since these water turbines have large bodies in a single piece, they cause high cost in processes of installation, maintenance and repair.

Document DE 20313493 discloses a turbine according to the preamble of claim 1.

### Brief Disclosure of Invention

The turbine of the invention can use both wind energy and water energy, and also it can operate both horizontally and vertically. If it is operated vertically, installation, maintenance and repair processes are low-cost and easy since there is no generator or equipment thereon. Rotor and blade mechanisms in the turbine are highly efficient due to their operation principles. Accordingly, the turbine of the invention comprises are least one rotor, which can rotate in connection with at least one base; at least one blade, which rotates said rotor with fluid flow. Said blade has such a structure that it can slide in at least one channel in the rotor. The blade slides forepart of the rotor when the blade comes to backside of the rotor, and continues rotating the rotor by the effect of flow. If many blades and rotors are used in turbine of the invention, some rotors are disconnected from the other rotors when desired. Thus, stable rotational speed is obtained from the rotors and electric energy at stable level is obtained from the generator, to which rotors are connected, without need for using brake mechanism in the turbine.

### Obiective of Invention

An aim of the invention is to form a turbine which ensures that energy is produced from fluid sources such as wind and/or water.

Another aim of the invention is to form a highly efficient turbine which can be operated by both water and by wind.

A further is to form a turbine that has low installation, maintenance and repair costs.

Still a further is to form a long-life, safe turbine which is easy and cheap to produce.

### Description of Figures

The turbine of the invention and examples of this turbine are illustrated in figures, wherein;
Figure 1 is perspective view of one turbine with one blade.
Figure 2 is top sectional view of the turbine.
Figures 3-8 are top views which illustrate steps of operation principle of the turbine.
Figure 9-13 are perspective views of steps in operation of a turbine with four blades.
Figure 14 is side view of one multi blade turbine..
Figure 15 is top view of the turbine shown in figure 14.
Figure 16 is side view of one multi blade turbine and double arrays.
Figure 17 is top view of the turbine shown in figure 16.
Figure 18 is top view of directional member and the turbine shown in figures 16-17.
Figure 19 is side view of another multi blade turbine and double arrays.
Figure 20 is top view of the turbine, which is shown in figure 19, together with directional members.
Figure 21 is front view of the multi blade turbine showing its use in water.
Figure 22 is side view of the turbine shown in Figure 21.
Figure 23 is side view of the turbine, which is shown in figure 21-22, together with the directional member.
Figure 24 is front view of other multi blade turbine while it is used in water.

All the parts illustrated in figures are individually assigned a reference numeral and the corresponding terms of these numbers are listed as below.
Turbine (T)
Blade (1)
Rotor (2)
Base (3)
Blade tip (4)
Channel (5)
Directional member (6)
Directional member surfaces (7)
Crimp (8)
Sliding surface (9)
Flow (F)
Rotation axis (X)
Sliding direction of blade (I-I)
Active area (A)
Passive area (P)
Forepart (E)
Backside (B)
Rotating platform (D)
Array (S)
Water level (L)
Counter clockwise (SYT)

### Disclosure of Invention

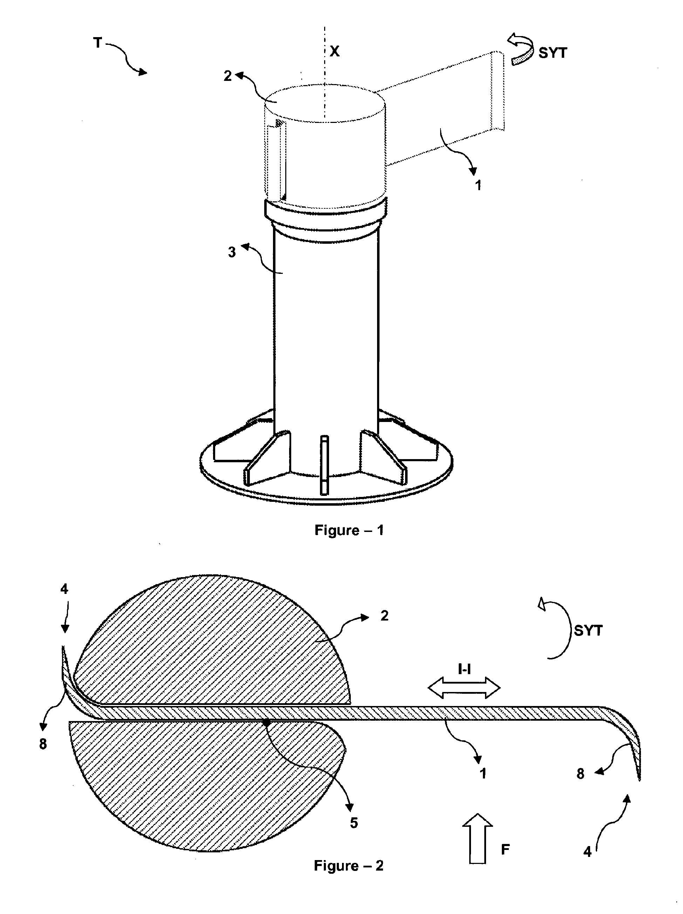

Figure 1 illustrates an example of the turbine (T) of the invention. Accordingly the turbine (T) comprises at least one rotor (2), which can rotate in connection with at least one base (3); and at least one blade (1), which rotates said rotor (2) by fluid energy and slides in the rotor (2). The blade (1) slides in at least one channel (5) (shown in figure 2) in the rotor (2) and preferably moves in perpendicular direction (I-I) (shown in figure 2) with respect to the rotation axis (X) of the rotor (2).

Figure 2 illustrates the top view of above mentioned blade (1) and the rotor (2) in simplified way. Accordingly the blade (1) is provided in a channel (5) in the rotor (2) as disclosed above. Flow (F) of the fluid (water and wind) exerts pressure on blade's (1) portion protruding out of the rotor (2) and the rotor (2) can rotate (in this example, in direction of counter clockwise (SYT)). Crimps (8) are formed on two tips (4) of the blade (1) in figure 2, and these crimps (8) have such structures that they divert movement of flow (F) on the blade (1) and also prevent the blade (1) from moving out the channel (5). Directions of the crimps (8) on the blade tips (4) are in reverse direction of the rotation direction of the blade (1).

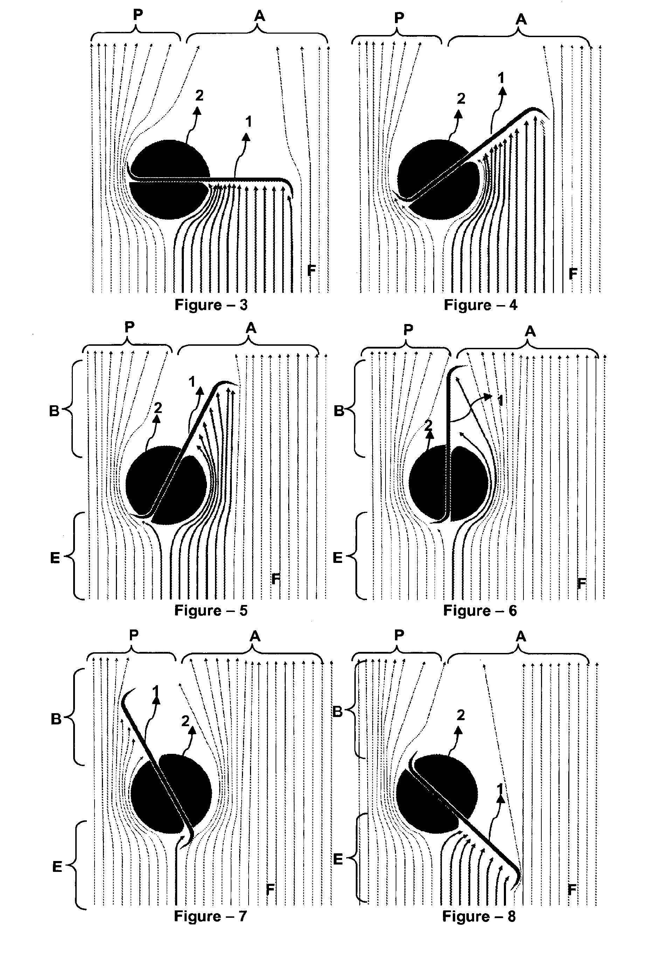

Figures 3-8 illustrate the positions of the rotor (2) and blade (1) step by step while they are operated. As shown in these figures, the blade's (1) portion protruding out from the rotor (2) is referred to as active area (A), and the other portion is referred to as passive area (P). Suppose that figure 3 illustrates the minute the movement starts, in said position, it is shown that surface of the blade (1) is vertical position with respect to flow (F) and protrudes out from the rotor (2) completely. By the effect (pressure exerted on the blade (1) by the flow) of the flow (F), the blade (1) gets the rotor (2) to the positions shown in figures 4-6. The position in the figure 6 is the position in which the blade's (1) portion protruding out remains between the two areas (A, P). In other words, the blade's (1) portion protruding out remains at backside (B) (suppose that flow (F) comes from the forepart (E) of the rotor (2)) of the rotor (2) and takes a position in which it is not affected by flow (F). The rotor (2) rotates by the energy it obtained after this position and blade's (1) portion remaining at backside (B) of the rotor (2) enters in the passive area (P) and then, the blade (1) slides towards the forepart (E) (towards the direction flow (F) comes) of the rotor (2) in the channel (5) (in direction of I-I). In said situation, the blade's (1) portion protruding out reaches to forepart (E) of the rotor (2) and active area (A). Herein, the blade (1) and the rotor (2) firstly takes the position shown in Figure 8 and then the position shown in Figure 3, and thus completing a full rotation. During this rotation, since the blade's (1) portion protruding out from the rotor (2) substantially remains in active area (A) and there is no apparent blade (1) area in passive area (P) to create force in reverse direction with the rotation, high efficiency is obtained from the flow (F).

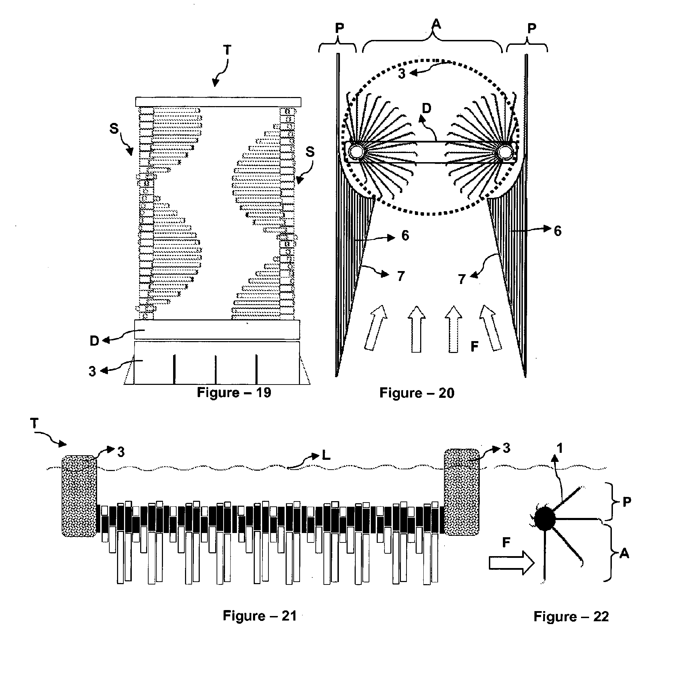

In steps shown in figures 3-8, there are various alternatives which ensure that the blade (1) comes to active area (A) by sliding in the channel (5). One of these alternatives is carried out by using crimps (8) on the blade tip (4). In the position shown in figure 7, the portion of the blade (1) which remains at the forepart (E) of the rotor (2) utilizes fluid pressure more when compared to the backside (B). For this aim, it is ensured that the blade (1) is slid to the active area (A) thanks to crimp (8) on the blade tip (4). In other words, by benefitting from rotor (2) and blade (1) geometry, the fluid flow (F) is diverted and the blade (1) is slid to active area (A). Another alternative is created when the turbine (T) is operated horizontally (the examples for this alternative are illustrated in figures 21-23 and disclosed below). While the active area (A) is present at lower portion of the turbine (T) and the passive area (P) is present at upper portion of the turbine (T), the blade (1) slides down through the channel (5) by itself (by its own weight) while coming to the passive area (P) and then, it comes to active area (A) again. Another alternative is to take the blade (1) in the active area (A) by means of a mechanism (not shown in figures) in the channel (5). For said aim, it is possible to obtain the desired result by a mechanism on the rotor (2), which slides the blade (1) towards the active area (A) again while the blade (1) coming in the passive area (P).

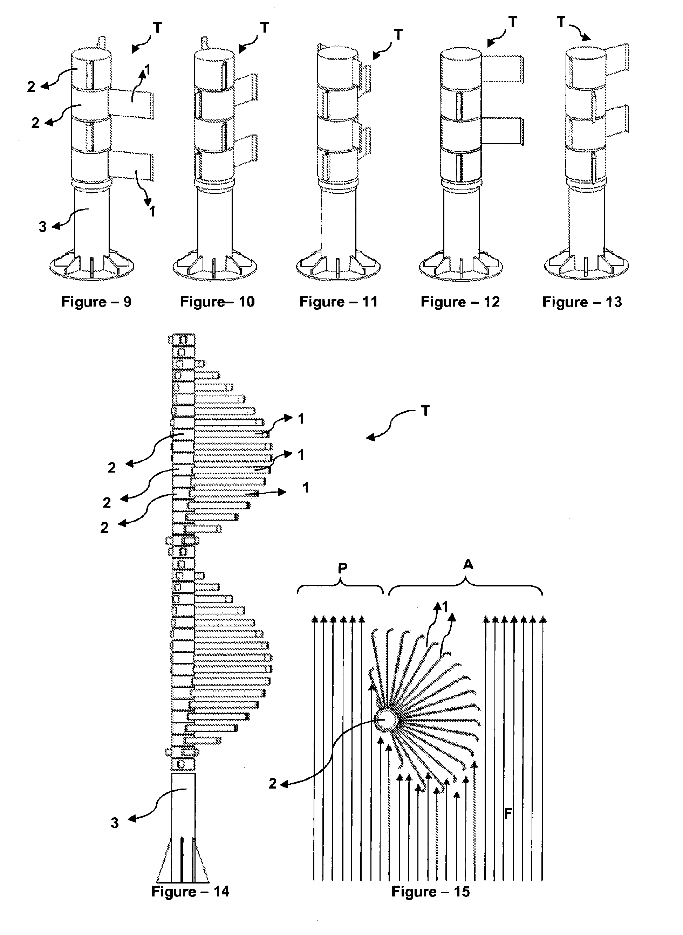

Figures 9-13 show operation steps of one turbine (T) having four blades (1). In this example, the blades (1) are provided in angled manner with respect to each other. Since many blades (1) are used and they (1) are provided in angled manner to each other, as many as possible areas of blades (1) are formed in changeable directions of flow (F) and thus, this ensures more energy production. All rotors (2) are connected to each other and much higher mechanic energy can be produced by effect of blades (1). The example in figures 9-13 illustrates one turbine (T) operating vertically. In said turbine (T), the rotors (2) are set on the base (3) and connected to a generator (not shown in figures) in the base (3), and thus it is possible to produce electricity. Since the base (3) is provided at lower side, it is easily accessible and thus, installation, maintenance and repair processes are much easier and cheaper.

Figure 14 shows one turbine (T) in which a number of blades (1) are used. Here, angle between said blades (1) is significantly reduced and an increased number of blade (1) areas are formed in active area (A) as shown in figure 15. This increases energy production as mentioned above.

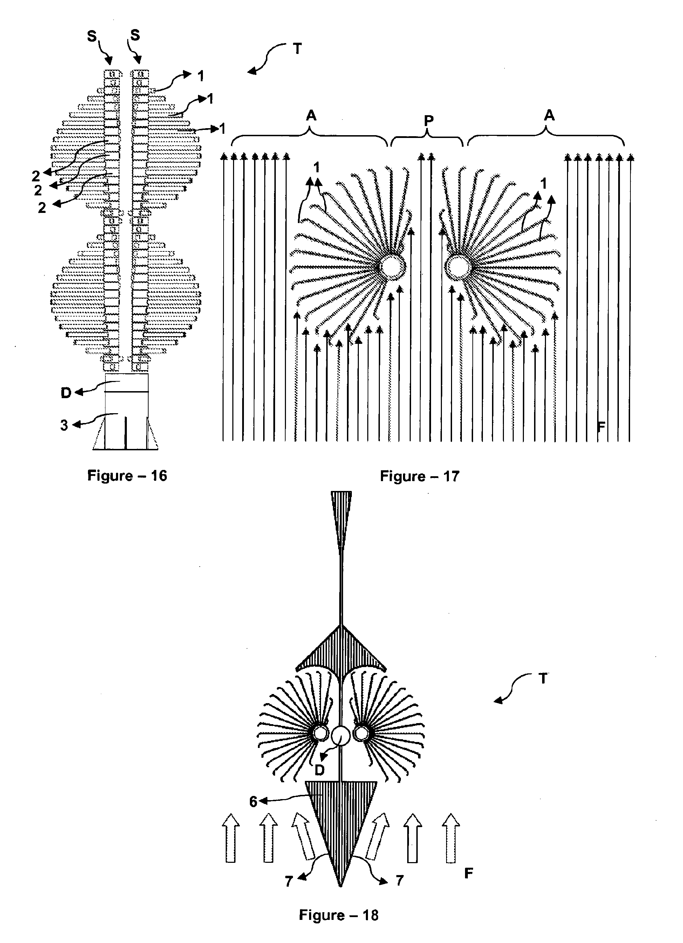

Figure 16 illustrates a multi blade (1) turbine (T) and double arrays (S). In each array (S), there are rotors (2) arranged successively and related blades (1). Each array (S) is connected to a platform (D) which can rotate on the base (3) and its position is adjusted by rotating the platform (D) according to flow (F) direction. As shown in figure 17, in this example, the passive area (P) remains between two arrays (S). Since there is no blade (1) extending towards the passive area (P), these two arrays (S) can be kept as closely as possible, which saves space. In turbines (T) with double or many arrays (S), it is important that direction of the turbine (T) is adjusted according to flow (F) and therefore, angle of the position of the rotating platform (D) is to be adjusted. Figure 18 illustrates a solution for said problem. According to said solution, thanks to a directional member (6) connected to the rotating platform (D), angle of the position of the platform (D) is adjusted automatically according to flow (F). Wide surfaces (7) (preferably angled) on the directional member (6) keep the directional member (6), and therefore the platform (D), balanced in the direction of flow (F) by the effect of flow (F). Another example similar to said situation is shown in figures 19- 20. Here, distance between the arrays (S) is kept much and the active area (A) is formed between these two arrays (S). And also, the turbine (T) is positioned with respect to flow (F) by benefitting from surfaces (7) of the directional members (6) connected to rotating platform (D). The directional members (6) can rotate the turbine (T) towards the flow (A) more easily particularly in embodiments in which turbine (T) is used by benefiting from offshore current (as shown in figures 21-23)..

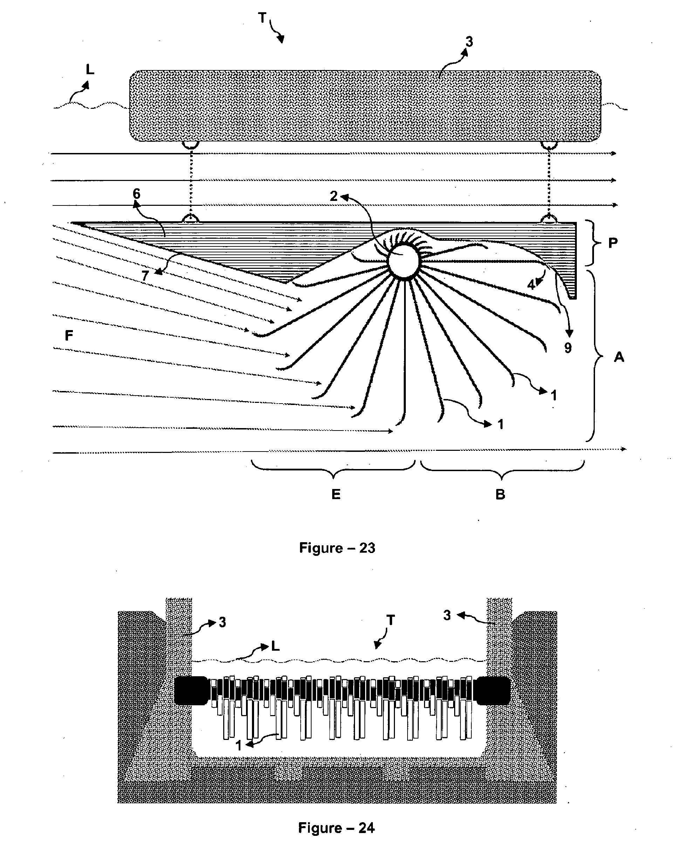

In figures 21-24 illustrate the embodiments in which the turbine (T) of the invention is operated horizontally and in water. In these examples, the turbine (T) is under water level (L) and flowing of water is utilized. For example, the figures 21- 22 illustrate offshore embodiment and pontoons are used on both ends of the turbine (T) as base (3), and then, energy is obtained from the turbine (T) by benefiting from sea flow. Figure 23 illustrates the other directional members (6), which direct (with the aim of directional surfaces (7)) the flow (F) towards the blades (1) in active area (A) and also position the turbine (T) according to the direction of flow (F). In said directional member (6), there is also at least one sliding surface (9), which slides the blades (1) from backside (B) to forepart (E) after it contacts with tips (4) of the blades (1) while the blades (1) are in passive area (P). The sliding surface (9) may be a part of the directional member (6) or may be used separately in the turbine (T). Figure 24 illustrates one embodiment in which the turbine (T) is used in one water channel. Here, channel walls are used as base (3) and energy is obtained from the turbine (T) thanks to water flowing within the channel.

One of the advantages of the turbine (T) of the invention is that some of the rotors (2) are disconnected (by displacing shafts (not shown in figures) connecting the rotors (2)) from other rotors when desired and thus preventing some rotors from producing energy. For reconnection, the rotors (2) are connected to each other again. Therefore, in case of an excessive flow, the turbine (T) can be protected. This feature (the rotors are detachable) also ensures that stable rotation speed (in case of superabundant wind) is provided from the rotors without need for using brake mechanism in the turbine (T), and electric energy at stable level is produced by a generator connected to said rotors. Thanks to detachability feature of rotors (2), the turbine (T) can be operated in a wide range of fluid speed. In addition, in case the fluid speed increases (in the event of storms) too much, the blades (1) are kept at backside (B) and thus, they protected from extreme wind speed.

## Claims

1. A turbine (T) comprizing
at least one rotor (2) which can rotate in connection with at least one base (3); at least one blade (1) which rotates each rotor (2) by fluid flow (F), which reaches to forepart (E) of the rotor (2) by sliding through at least one channel (5) within a rotor (2) after it reaches to backside (B) of the rotor (2) by rotation of the rotor (2), **characterized in that** it comprises crimps (8), whose direction is in reverse rotation direction of the blade, on two tips (4).

2. A turbine (T) according to Claim 1 **characterized in that** the blade (1) slides vertically (I-I) with respect to rotation axis (X) of the rotor (2).

3. A turbine (T) according to Claim 1 **characterized in that** on the rotor (2) there is provided a mechanism which slides the blade (1) to forepart.

4. A turbine (T) according to Claim 1 **characterized in that** in case many blades (1) and rotors (2) are used, there are detachable connections between the rotors (2).

5. A turbine (T) according to Claim 4 **characterized in that** the blades (1) are provided in angled manner with respect to each other.

6. A turbine (T) according to Claim 1 **characterized in that** in case many arrays (S) comprising the blade (1) and rotor (2) in the turbine (T) are provided, each array (S) is connected to a platform (D) rotating on the base (3).

7. A turbine (T) according to Claim 6 **characterized in that** angle of the position of the platform (3) is adjustable with respect to the fluid flow (F).

8. A turbine (T) according to Claim 7 **characterized in that** there is at least one directional member (6) which adjusts angle of the position of the platform (D) with respect to the fluid flow (F).

9. A turbine (T) according to Claim 8 **characterized in that** on the directional member (6) there are wide surfaces (7), which keep the directional member (6) balanced in direction of flow (F) by the effect of flow (F).

10. A turbine (T) according to Claim 1 **characterized in that** it comprises at least one directional member (6) which diverts the flow (F) to the blades (1).

11. A turbine (T) according to Claim 1 **characterized in that** it comprises at least one sliding surface (9), which slides the blades (1) from backside (B) towards forepart (E) after contacting with the tips (4) of the blades (1).

## Patentansprüche

1. Turbine (T), die mindestens einen Rotor (2), der in Verbindung mit mindestens einer Basis (3) rotieren kann, und mindestens ein Blatt (1) aufweist, das jeden Rotor (2) mittels Fluidstrom (F) rotiert, und das das Vorderteil (E) des Rotors erreicht indem es nachdem es die Rückseite (B) des Rotors (2) durch Rotation des Rotors (2) erreicht durch mindestens einen Kanal (5) in einem Rotor (2) gleitet, **dadurch gekennzeichnet, dass** es Krümmungen (8) aufweist, deren Richtung an beiden Enden (4) die umgekehrte Rotationsrichtung des Blattes ist.

2. Turbine (T) nach Anspruch 1, **dadurch gekennzeichnet, dass** das Blatt (1) bezüglich der Rotationsachse (X) des Rotors (2) vertikal (I-I) gleitet.

3. Turbine (T) nach Anspruch 1, **dadurch gekennzeichnet, dass** auf dem Rotor (2) ein Mechanismus bereitgestellt ist, der das Blatt (1) zum Vorderteil gleiten lässt.

4. Turbine (T) nach Anspruch 1 **dadurch gekennzeichnet, dass**, falls viele Blätter (1) und Rotoren (2) eingesetzt werden, lösbare Verbindungen zwischen den Rotoren (2) vorhanden sind.

5. Turbine (T) nach Anspruch 4, **dadurch gekennzeichnet, dass** die Blätter (1) in abgewinkelter Weise in Bezug zueinander bereitgestellt sind.

6. Turbine (T) nach Anspruch 1, **dadurch gekennzeichnet, dass**, falls viele Anordnungen (S), die das Blatt (1) und den Rotor (2) aufweisen, in der Turbine (T) bereitgestellt sind, jede Anordnung (S) mit einer Plattform (D) verbunden ist, die auf der Basis (3) rotiert.

7. Turbine (T) nach Anspruch 6, **dadurch gekennzeichnet, dass** der Winkel der Position der Plattform (3) in Bezug auf den Fluidstrom (F) einstellbar ist.

8. Turbine (T) nach Anspruch 7, **dadurch gekennzeichnet, dass** mindestens ein Richtelement (6), das den Winkel der Position der Plattform (D) mit Bezug auf den Fluidstrom (F) einstellt, vorhanden ist.

9. Turbine (T) nach Anspruch 8, **dadurch gekennzeichnet, dass** es auf dem Richtelement (6) große Oberflächen (7) gibt, die das Richtelement (6) in Strömungsrichtung (F) durch die Wirkung der Strömung (F) im Gleichgewicht halten.

10. Turbine (T) nach Anspruch 1, **dadurch gekennzeichnet, dass** sie mindestens ein Richtelement (6) aufweist, das die Strömung (F) zu den Blättern (1) lenkt.

11. Turbine (T) nach Anspruch 1, **dadurch gekennzeichnet, dass** sie mindestens eine Gleitoberfläche (9) aufweist, die die Blätter (1) nach dem Kontakt mit den Enden (4) der Blätter (1) von der Rückseite (B) in Richtung Vorderteil (E) gleiten lässt.

## Revendications

1. Turbine (T) comprenant
au moins un rotor (2) qui peut tourner en relation avec au moins une base (3) ;
au moins une pale (1) qui fait tourner chaque rotor (2) par un écoulement de fluide (F), qui atteint le devant (E) du rotor (2) par glissement à travers au moins un canal (5) au sein d'un rotor (2) après qu'il atteint le derrière (B) du rotor (2) par rotation du rotor (2), **caractérisée en ce qu'**elle comprend des sertissures (8), dont le sens est dans le sens de rotation inverse de la pale, sur deux bouts (4).

2. Turbine (T) selon la revendication 1, **caractérisée en ce que** la pale (1) glisse verticalement (I-I) par rapport à l'axe de rotation (X) du rotor (2).

3. Turbine (T) selon la revendication 1, **caractérisée en ce que** sur le rotor (2) est prévu un mécanisme qui fait glisser la pale (1) vers le devant.

4. Turbine (T) selon la revendication 1, **caractérisée en ce que** dans le cas où de nombreuses pales (1) et de nombreux rotors (2) sont utilisés, on a des raccords détachables entre les rotors (2).

5. Turbine (T) selon la revendication 4, **caractérisée en ce que** les pales (1) sont disposées en faisant un angle les unes par rapport aux autres.

6. Turbine (T) selon la revendication 1, **caractérisée en ce que** dans le cas où de nombreuses séries (S) comprenant la pale (1) et le rotor (2) dans la turbine (T) sont prévues, chaque série (S) est reliée à une plate-forme (D) tournant sur la base (3).

7. Turbine (T) selon la revendication 6, **caractérisée en ce que** l'angle de la position de la plate-forme (3) est réglable par rapport à l'écoulement de fluide (F).

8. Turbine (T) selon la revendication 7, **caractérisée en ce qu'**il y a au moins un organe directionnel (6) qui règle l'angle de la position de la plate-forme (D) par rapport à l'écoulement de fluide (F).

9. Turbine (T) selon la revendication 8, **caractérisée en ce que** sur l'organe directionnel (6) se trouvent des surfaces larges (7), qui maintiennent l'organe directionnel (6) équilibré dans le sens d'écoulement (F) par l'effet d'écoulement (F).

10. Turbine (T) selon la revendication 1, **caractérisée en ce qu'**elle comprend au moins un organe directionnel (6) qui dévie l'écoulement (F) vers les pales (1).

11. Turbine (T) selon la revendication 1, **caractérisée en ce qu'**elle comprend au moins une surface de glissement (9), qui fait glisser les pales (1) du derrière (B) vers le devant (E) après contact avec les bouts (4) des pales (1).
